Europäisches Patentamt

(19) European Patent Office

Office européen des brevets

(11) Veröffentlichungsnummer: **0 181 541**
**B1**

(12) EUROPÄISCHE PATENTSCHRIFT

(45) Veröffentlichungstag der Patentschrifft:
07.02.90

(51) Int. Cl.⁵: **C 08 L 59/02, C 08 L 51/04**

(21) Anmeldenummer: 85113566.5

(22) Anmeldetag: 25.10.85

(54) Schlagzähe Polyoxymethylenformassen sowie ein Verfahren zu deren Herstellung.

(30) Priorität: 14.11.84 DE 3441547

(43) Veröffentlichungstag der Anmeldung:
21.05.86 Patentblatt 86/21

(45) Bekanntmachung des Hinweises auf die Patenterteilung:
07.02.90 Patentblatt 90/06

(84) Bennante Vertragsstaaten:
BE DE FR GB IT NL SE

(56) Entgegenhaltungen:
EP-A-0 058 331
EP-A-0 156 285
FR-A-2 046 991
US-A-4 296 216

Die Akte enthält technische Angaben, die nach dem Eingang der Anmeldung eingereicht wurden und die nicht in dieser Patentschrift enthalten sind.

(73) Patentinhaber: BASF Aktiengesellschaft
Carl-Bosch-Strasse 38
D-6700 Ludwigshafen (DE)

(72) Erfinder: Schuette, Wilhelm, Dr.
Frankstrasse 5
D-6720 Speyer (DE)
Erfinder: Mc Kee, Graham Edmund, Dr.
Kastanienweg 8
D-6940 Weinhelm (DE)
Erfinder: Hilt, Albrecht, Dr.
Moselstrasse 5
D-6703 Limburgerhof (DE)
Erfinder: Heinz, Gerhard, Dr.
Im Vogelsang 2
D-6719 Weisenheim (DE)
Erfinder: Goerrissen, Heiner, Dr.
Berner Weg 24
D-6700 Ludwigshafen (DE)

**Beschreibung**

Es ist bekannt, die Schlagzähigkeit von Polyoxymethylenformmassen durch Einverleiben von kautschukelastischen Polymerisaten zu verbessern. In der DE-OS-1 964 156 wird eine Mischung aus Polyoxymethylen mit einem Pfropfkautschuk beschrieben, wobei die Pfropfgrundlage aus einem Acrylsäurealkylester-Butadien-Polymerisat besteht, und die Pfropfhülle aus weiteren Monomeren aufgebaut ist. Die Schlagzähigkeit solcher Formmassen läßt insbesondere bei tiefen Temperaturen zu wünschen übrig. Darüberhinaus haben solche Formmassen eine ungenügende thermische Stabilität. Auch Mischungen aus Polyoxymethylenen und Polyurethanen wie sie in der DE-PS-1 193 240 beschrieben werden, haben keine ausreichende Kälteschlagzähigkeit. Zusätzlich haben solche Formmassen noch den Nachteil, daß sie am Licht vergilben und die Polyurethane sich bei höheren Verarbeitungstemperaturen zersetzen. Entsprechend der BE-PS-703 215 wurde schon versucht, die Schlagzähigkeit von Polyoxymethylen durch Zusatz eines Butadien/Acrylnitrilkautschuks, der vorzugsweise unvernetzt ist, zu verbessern. Auch solche Formmassen haben bei tiefen Temperaturen keine ausreichende Schlagzähigkeit; darüberhinaus sind größere Mengen des Kautschuks mit Polyoxymethylen unverträglich. Auch der Zusatz von niedrig-kristallinem Polybutadien zu Polyoxymethylen, wie er aus der US-PS-4 424 307 oder der Zusatz von Blockcopolymeren aus Butadien und Polyalkylenoxid, wie er aus der DE-OS-2 408 487 bekannt ist, ergibt keine ausreichende Schlagzähigkeit bei tiefen Temperaturen.

In der nichtvorveröffentlichten EP-A-156 285 (Dokument im Sinne von Art. 54 (3) EPÜ) werden Polyoxymethylenformmassen beschrieben, die kautschukelastische Pfropfpolymerisate auf der Basis von Polybutadien und einer Pfropfhülle aus Styrol, (Meth)acrylsäureestern und Acrylnitril enthalten. Die Pfropfpolymerisate werden nach Ausfällung trocken dem Polyoxymethylen zugegeben.

Es war deshalb die technische Aufgabe gestellt, schlagzähe Polyoxymethylenformmassen zur Verfügung zu stellen, die bei tiefen Temperaturen, insbesondere bis -40°C, sich durch eine gute Schlagzähigkeit auszeichnen und darüberhinaus eine gute thermische Stabilität haben und schließlich geringe Neigung zum Verfärben unter Einfluß von Licht aufweisen.

Diese technische Aufgabe wird gelöst durch schlagzähe Polyoxymethylenformmassen, enthaltend

A) 30 bis 95 Gew.-% mindestens eines Polyoxymethylens
B) 5 bis 70 Gew.-% mindestens eines durch Emulsionspolymerisation hergestellten, in der Komponente A dispergierten kautschukelastischen Pfropfpolymerisats mit einem mittleren Teilchendurchmesser von 0,08 bis 2 μm, aufgebaut aus 1.

1. 60 bis 90 Gew.-% einer Pfropfgrundlage aus vernetztem Polybutadien in der bis zu 30 Gew.-% des Butadiens durch Isopren, 2,3-Dimethylbutadien, Styrol, p-Methylstyrol, α-Methylstyrol und/oder (Meth)acrylnitril ersetzt sein kann und
2. 10 bis 40 Gew.-% mindestens einer Pfropfhülle aus Polymerisaten von Styrol und/oder Methacrylsäuremethylester, in der bis zu 30 Gew.-%, bezogen auf 2, durch Acrylnitril oder Acrylsäure-$C_1$- bis -$C_8$-alkylester ersetzt sein können

wobei sich die Gewichtsprozente A+B und 1+2 auf jeweils 100 % ergänzen sowie

C) gegebenenfalls Hilfsstoffe in wirksamen Mengen, erhältlich durch inniges Vermischen einer Schmelze des Polyoxymethylens A) mit einer wäßrigen Dispersion des kautschukelastischen Pfropfpolymerisats B) und gleichzeitiger Entfernung des verdampfenden Wassers.

Die neuen Polyoxymethylenformmassen zeichnen sich durch eine gute Schlagzähigkeit bei tiefen Temperaturen, insbesondere bis zu -40°C, aus. Darüberhinaus haben die neuen Polyoxymethylenformmassen eine gute Temperaturbeständigkeit und eine geringe Tendenz, sich unter Einwirkung von Licht zu verfärben.

Geeignete Polyoxymethylene (Komponente A) sind Homopolymerisate des Formaldehyds oder Copolymere des Formaldehyds oder des Trioxans bzw. Tetroxans mit cyclischen und/oder linearen Formalen, z. B. 1,3-Dioxolan, Butandiolformal oder Epoxiden wie Ethylenoxid oder Propylenoxid. Die Homopolymeren haben in der Regel thermisch stabile Endgruppen wie Ester- oder Ethergruppen. Die Copolymeren des Formaldehyds oder des Trioxans bzw. des Tetroxans weisen vorteilhaft mehr als 50 %, insbesondere mehr als 75 % Oxymethylengruppen auf. Besonders bewährt haben sich Copolymere, in denen mindestens 0,1 % Gruppen des Comonomeren enthalten sind, die mindestens zwei benachbarte Kohlenstoffatome in der Kette haben. Besondere technische Bedeutung haben Polyoxymethylene erlangt, die 0,5 bis 10 %, insbesondere 1 bis 5 % Comonomere enthalten. Solche Copolymere sind in an sich bekannter Weise durch kationische Copolymerisation von Trioxan mit geeigneten Comonomeren wie cyclischen Ethern oder Acetalen, z. B. Ethylenoxid, 1,3-Dioxolan, 1,3-Dioxan, 1,3-Dioxacylcycloheptan, 1,3,6-Trioxacyclooctan oder mit linearem Oligo- oder Polyformalen wie Polydioxolan, Polybutandiolformal erhältlich. In der Regel haben die verwendeten Polyoxymethylene ein Molekulargewicht (Zahlenmittel) von 10 000 bis 100 000.

Als zusätzliche Comonomere für Trioxan werden gegebenenfalls noch Verbindungen mit mehreren polymerisierbaren Gruppen im Molekül, z. B. Alkylglycidylformale, Polyglykoldiglycidyläther, Alkandioldiglycidylether oder Bis-(alkantriol)-triformale verwendet, und zwar in einer Menge von 0,05 bis 5, vorzugsweise 0,1 bis 2 Gew.-%, bezogen auf die Gesamtmonomermenge.

Die erfindungsgemäßen Formmassen enthalten die Komponente A in Mengen von 30 bis 95 Gew.-%, insbesondere 40 bis 85 Gew.-%.

Die erfindungsgemäßen Formmassen enthalten als Komponente B 5 bis 70 Gew.-%, insbesondere 15 bis 60 Gew.-%, mindestens eines durch Emulsionspolymerisation hergestellten, in der Komponente A dispergierten vernetzten kautschukelastischen Pfropfpolymerisats mit einem mittleren Teilchendurchmesser von 0,08 bis 2 μm.

Diese Pfropfpolymerisate sind aufgebaut aus

1.  60 bis 90 Gew.-% einer Pfropfgrundlage aus vernetztem Polybutadien, das bis zu 30 Gew.-%, bezogen auf 1 durch Isopren, 2,3-Dimethylbutadien, Styrol, p-Methylstyrol, α-Methylstyrol und/oder (Meth)acrylnitril als Comonomere enthalten kann. Vorteilhaft hat die Pfropfgrundlage einen Gelgehalt von größer 50 %, insbesondere größer 60 % und vorteilhaft eine Glasübergangstemperatur ≤ -40°C. Die Pfropfgrundlage erhält man beispielsweise durch Emulsionspolymerisation von Butadien und gegebenenfalls Comonomeren unter Verwendung von radikalischen Initiatoren sowie gegebenenfalls Molekulargewichtsreglern wie Mercaptanen, z. B. t-Dodecylmercaptan. Bevorzugt wird vernetztes Polybutadien als Pfropfgrundlage verwendet.

Das Pfropfpolymerisat enthält weiterhin

2.  10 bis 40 Gew.-% mindestens einer Pfropfhülle aus Polymerisaten von Styrol und/oder Methacrylsäuremethylester, in der bis zu 30 Gew.-%, bezogen auf 2., durch Acrylnitril oder Acrylsäure-$C_1$- bis -$C_8$-alkylester ersetzt sein können.

Es versteht sich, daß sich die Prozentangaben zu 1. und 2. auf 100 % ergänzen.

Solche Pfropfpolymerisate sind an sich bekannt und werden nach üblichen Arbeitsweisen, wie sie aus Houben-Weyl, Methoden der organischen Chemie, Band XIV/1, 1961, Seiten 133 bis 560, bekannt sind, hergestellt.

Bevorzugte Pfropfpolymerisate sind aufgebaut aus 70 bis 85 Gew.-% vernetztem Polybutadien mit einem Gelgehalt größer 70 % als Pfropfgrundlage und 15 bis 30 Gew.-% einer Pfropfhülle aus Methacrylsäuremethylester, der bis zu 20 Gew.-% durch Acrylsäure-$C_1$- bis -$C_4$-alkylester, insbesondere Methylacrylat, Ethylacrylat oder n-Butylacrylat ersetzt sein kann.

Die Pfropfkautschukdispersionen haben einen mittleren Teilchendurchmesser von 0,08 bis 2 μm, insbesondere von 0,08 bis 0,5 μm (bestimmt durch elektronenmikroskopische Auszählung oder Ultrazentrifugierung). Die Dispersionen enthalten in der Regel 30 bis 80, vorzugsweise 40 bis 65 Gew.-% Wasser. Die Summe der Gewichtsprozente der Komponenten A und B ergänzen sich jeweils auf 100 %.

Zusätzlich können die erfindungsgemäßen Formmassen als weitere Komponente C alle Zusatzstoffe enthalten, wie sie für thermoplastische Polyoxymethylene üblich und gebräuchlich sind. Als solche Zusatzstoffe seien beispielsweise genannt: Farbstoffe oder Pigmente, Antistatika, Antioxidantien, Stabilisatoren, Nukleierungsmittel, optische Aufheller, Entformungshilfsmittel, Flammschutzmittel und Schmiermittel. Als Zusatzstoffe sind auch verstärkend wirkende Füllstoffe wie Glasfasern, Glaskugeln, Talkum, Kreide, Wollastonit, Polytetrafluorethylen, Ruß oder Graphit zu verstehen. Solche verstärkend wirkenden Füllstoffe werden in Mengen z. B. von 10 bis 100, insbesondere von 10 bis 70 %, bezogen auf die Summe der Komponenten A und B angewandt. Besonders geeignete Verstärkungsmittel sind Wollastonit, Glasfasern oder Glaskugeln.

Es hat sich auch bewährt, wenn man insbesondere 0,1 bis 3 Gew.-% an Alkoxymethylmelaminen zugibt. Solche Alkoxymethylmelamine sind beispielsweise beschrieben in der DE-OS-2 921 167. Darüberhinaus ist es oft auch wünschenswert, weitere, die Schlagzähigkeit verbessernde Zusätze, z. B. thermoplastische Polyurethane, wie sie aus der DE-PS-1 193 240 bekannt sind, in Mengen von 10 bis 50 %, bezogen auf die Summe der Komponenten A und B, zuzugeben.

Die erfindungsgemäßen Formmassen sind nach einem Verfahren erhältlich, nach dem zunächst das thermoplastische Polymere A, gegebenenfalls unter Mitverwendung von weiteren Stoffen C, aufgeschmolzen wird. Die Kautschukdispersion B wird dann direkt, d.h. ohne den Kautschuk vorher auszufällen, in die Polymerschmelze eindosiert. Dabei verdampft spontan das Wasser und die Kautschukteilchen verteilen sich in der Schmelze. In vorteilhafter Weise verfährt man hierbei so, daß man in einem Extruder zunächst das Polyoximethylen A plastifiziert und dann über eine im Verlauf des Extruders angeordnete Zugabeöffnung die Kautschukdispersion zugibt, mit der Polymerisatschmelze innig vermischt und über mindestens eine Entgasungsöffnung die flüchtigen Anteile entfernt. Auch in diesem Fall ist es besonders vorteilhaft, als Komponente A ein Polyoximethylen-Rohpolymerisat zu verwenden, da dann gleichzeitig mit der Kautschukeinmischung der thermische Abbau des Polyoximethylen bis hin zu stabilen Kettenenden erfolgt. Die bei diesem Abbau entstehenden flüchtigen Produkte werden zusammen mit dem Wasser über Entgasungsöffnungen im Extruder abgezogen.

Nach der Einmischung der Kautschukdispersion in die Polyoximethylen-Schmelze, wobei die Verarbeitungstemperatur im üblichen Verarbeitungsbereich des thermoplastischen Polymeren, d.h. zwischen etwa 170°C und 260°C liegt, wird die Masse ausgepreßt, gekühlt und zerkleinert.

Die erfindungsgemäßen Formmassen eignen sich zur Herstellung von Formteilen durch Spritzgießen oder Extrusion.

Der erfindungsgemäße Gegenstand sei an folgenden Beispielen veranschaulicht.

Im folgenden bezeichnen:

$W_{50}$  50 % Bruchenergie an 2 mm starken Rundscheiben, gemessen nach DIN 53 443

$V_L$  Gewichtsverlust einer Probe nach 2 stündigem Erhitzen auf 222°C in Luft

Gelgehalt  eine Probe der Pfropfgrundlage wird bei 70°C unter einem Druck von 250 mbar für 24 Stunden getrocknet, danach 1-%-ig mit Tetrahydrofuran gemischt und diese Mischung 24 Stunden bei 23°C geschüttelt. Das entstandene Gel wird mit 40 000 g abzentrifugiert und danach 24 h bei 70°C unter einem Druck von 250 mbar getrocknet.

Gelgehalt = Gewicht des Gels nach Trocknung/Gewicht der Pfropfgrundlage nach Trocknung

**Beispiele**

**Verwendete Pfropfgrundlagen**

G1  Polymerisat aus 100 Teilen Butadien und 1 Teil t-Dodecylmercaptan als Regler, hergestellt durch Emulsionspolymerisation in Gegenwart von 1 Gew.-% Kaliumstearat als Emulgator. Gelgehalt: 71 Gew.-%; Feststoffgehalt: 39 Gew.-%.

G2  Emulsionspolymerisat aus Butadien, hergestellt entsprechend G1, jedoch mit einem Gelgehalt von 84 % und einem Feststoffgehalt von 48 %.

G3  Polymerisat aus 90 Gew.-Teilen Butadien, 10 Gew.-Teilen Styrol und 1 Gew.-Teil t-Dodecylmercaptan als Regler, hergestellt durch Emulsionspolymerisation in Gegenwart von 1 Gew.-% Kaliumoleat als Emulgator. Gelgehalt = 65 Gew.-%, Feststoffgehalt = 42 Gew.-%.

G4  (nicht anspruchsgemäß) Polymerisat aus 98 Teilen n-Butylacrylat und 2 Teilen Dicyclopentadienylacrylat, hergestellt durch Emulsionspolymerisation in Gegenwart von 0,6 Gew.-% Natriumhexadecylsulfonat als Emulgator. Feststoffgehalt: 43 Gew.-%.

G5  (nicht anspruchsgemäß) Polymerisat aus 60 Gew.-Teilen n-Butylacrylat und 40 Gew.-Teilen Butadien, hergestellt durch Emulsionspolymerisation in Gegenwart von 1,2 Gew.-% Natriumhexadecylsulfonat als Emulgator. Feststoffgehalt = 39 Gew.-%.

**Pfropfkautschuke**

P1  Auf 80 Gew.-Teile (bezogen auf Feststoff) der Pfropfgrundlage G1 wurden 20 Gew.-Teile Methylmethacrylat gepfropft. Die Dispersion hatte einen Feststoffgehalt von 41 Gew.-% und einen mittleren Teilchendurchmesser von 0,1 µm.

P2  Auf 80 Gew.-Teile (bezogen auf Feststoff) der Pfropfgrundlage G1 wurden 20 Gew.-Teile einer Mischung aus Styrol und Acrylnitril im Gewichtsverhältnis 3 : 1 gepfropft. Die Dispersion hatte einen Feststoffgehalt von 40 % und einen mittleren Teilchendurchmesser von 0,1 µm.

P3  Auf 60 Gew.-Teile (bezogen auf Feststoff) der Pfropfgrundlage G2 wurden zuerst 20 Gew.-Teile einer Mischung aus Styrol und Acrylnitril im Gewichtsverhältnis 3 : 1 und anschließend 20 Teile Methylmethacrylat gepfropft. Die Dispersion hatte einen Feststoffgehalt von 47 % und einen mittleren Teilchendurchmesser von 0,15 µm.

P4  90 Gew.-Teile (bezogen auf Feststoff) der Pfropfgrundlage G1 wurden mit 4 Gew.-% (bezogen auf Feststoff) einer Etylacrylat-Methacrylamid-Copolymerdispersion entsprechend DE-AS-2 427 960 agglomeriert. Auf die agglomerierte Pfropfgrundlage wurden dann 10 Gew.-Teile Methylmethacrylat gepfropft. Die Dispersion hatte einen Feststoffgehalt von 38 Gew.-% und einen mittleren Teilchendurchmesser von 0,28 µm.

P5  Auf 70 Gew.-Teile (bezogen auf Feststoff) der Pfropfgrundlage G3 wurden zunächst 10 Gew.-Teile Styrol und danach 20 Gew.-Teile Methylmethacrylat gepfropft. Die Dispersion hatte einen Feststoffgehalt von 45 Gew.-% und einen mittleren Teilchendurchmesser von 0,12 µm.

P6  Auf 70 Gew.-Teile (bezogen auf Feststoff) der Pfropfgrundlage G2 wurden 30 Gew.-Teile einer Mischung aus Methylmethacrylat und n-Butylacrylat im Gewichtsverhältnis 9 : 1 gepfropft. Die Dispersion hatte einen Feststoffgehalt von 49 Gew.-%, der mittlere Teilchendurchmesser betrug 0,09 µm.

P7  (Nicht anspruchsgemäß) Auf 80 Gew.-Teile (bezogen auf Feststoff) der Pfropfgrundlage G4 wurden 20 Gew.-Teile Methylmethacrylat gepfropft. Die Dispersion hatte einen Feststoffgehalt von 44 Gew.-% und einen mittleren Teilchendurchmesser von 0,45 µm.

P8  (Nicht anspruchsgemäß) Auf 75 Gew.-Teile (bezogen auf Feststoff) der Pfropfgrundlage G5 wurden 25 Gew.-Teile einer Mischung aus Styrol und Acrylnitril im Gewichtsverhältnis 3 : 1 gepfropft. Die Dispersion hatte einen Feststoffgehalt von 41 Gew.-% und einen mittleren Teilchendurchmesser von 0,1 µm.

**Polyoxymethylen**

Copolymerisat aus Trioxan und etwa 2,5 Gew.-%

1,3-Dioxepan, hergestellt durch kationische Polymerisation. Schmelzindex MFI 190/2,16 ca. 0,9 g/min, Dichte: 1,41 g/cm$^3$.

**Beispiel 1**

80 Gew.-Teile Polyoxymethylen wurden in einem Doppelschneckenextruder bei 200°C plastifiziert und in einer darauffolgenden Zone 20 Gew.-Teile (bezogen auf Feststoff) der Pfropfkautschukdispersion P1 dosiert zugeführt und innig mit dem geschmolzenen Polyoxymethylen vermischt. In den nachfolgenden zwei Entgasungszonen wurde der entstehende Wasserdampf sowie weitere flüchtige Anteile abgezogen. Die Schmelze wurde gestrangt, gekühlt und zerkleinert. Die erhaltene Formmasse hatte eine Bruchenergie $W_{50}$ von 45 Joule bei 23°C, 33 Joule bei -40°C und 19 Joule bei -60°C und einen Gewichtsverlust $V_L$ von 7,6 %; Farbe des Granulats: weiß.

Unmodifiziertes Polyoxymethylen hat eine Bruchenergie $W_{50}$ von 2 Joule bei 23°C, 1 Joule bei -40°C und kleiner 1 Joule bei -60°C.

**Vergleichsbeispiel 1**

Der Pfropfkautschuk P1 wurde mit Aceton ausgefällt (1 Gew.-Teil Aceton auf 1 Gew.-Teil Dispersion), filtriert und das Koagulat 48 Stunden bei 50°C unter einem Druck von 100 mbar getrocknet. 20 Gew.-Teile des getrockneten Kautschuks wurden zusammen mit 80 Gew.-Teilen Polyoxymethylen dem Einzug eines Doppelschneckenextruders vom Typ ZSK 28 zugeführt und bei 200°C extrudiert. Die erhaltene Formmasse hatte eine Bruchenergie $W_{50}$ von 34 Joule by 23°C, 22 Joule bei -40°C, 10 Joule bei -60°C und einen Gewichtsverlust $V_L$ von 8,5 %. Farbe des Granulats: weiß.

**Beispiel 2**

Man verfährt wie in Beispiel 1 beschrieben, verwendet jedoch anstelle der Dispersion P1 20 Gew.-Teile (bezogen auf den Feststoffgehalt) der Dispersion P2. Die erhaltene Formmasse hatte eine Bruchenergie $W_{50}$ von 37 Joule bei 23°C und 25 Joule bei -40°C, einen Gewichtsverlust $V_L$ von 7,9 %; Farbe des Granulats: gelbstichig.

**Beispiel 3**

Man verfährt wie in Beispiel 1 beschrieben, anstelle der Dispersion P1 wurden jedoch 20 Gew.-Teile (bezogen auf den Feststoffgehalt) der Dispersion P3 verwendet. Die erhaltene Formmasse hatte eine Bruchenergie $W_{50}$ von 25 Joule bei 23°C und 14 Joule bei -40°C, einen Gewichtsverlust $V_L$ von 7,5 %; Farbe des Granulats: weiß.

**Beispiel 4**

Man verfährt wie in Beispiel 1 beschrieben, verwendet jedoch anstelle der Dispersion P1 20 Gew.-Teile (bezogen auf den Feststoffgehalt) Dispersion P4. Die erhaltene Formmasse hatte eine Bruchenergie $W_{50}$ von 38 Joule bei 23°C und 27 Joule bei -40°C. Das erhaltene Granulat war weiß und hatte einen Gewichtsverlust $V_L$ von 7,6 %.

**Vergleichsbeispiel 2**

Man verfährt wie in Beispiel 2 beschrieben, verwendet jedoch den ausgefällten Pfropfkautschuk der Dispersion P5. Die Formmasse hatte eine Bruchenergie $W_{50}$ von 25 Joule bei 23°C, 10 Joule bei -40°C und 5 Joule bei -60°C und einen Gewichtsverlust $V_L$ von 7,4 %.

**Beispiel 5**

Analog Beispiel 1 werden 60 Teile Polyoxymethylen mit 36 Teilen (bezogen auf den Feststoffgehalt) der Dispersion P5 gemischt und granuliert. Die erhaltene Formmasse hatte eine Bruchenergie $W_{50}$ größer 120 Joule bei 23°C, 90 Joule bei -40°C und 41 Joule bei -60°C. Farbe des Granulats: weiß. Der Gewichtsverlust $V_L$ betrug 6,4 %.

**Beispiel 6**

60 Teile Polyoxymethylen werden zusammen mit 18 Teilen eines Polyurethans, aufgebaut aus 4,4'-Diphenylmethandiisocyanat, Adipinsäure und 1,4-Butandiol wurden einem Doppelschneckenextruder zugeführt und bei 200°C plastifiziert. In einer darauffolgenden Zone wurden 18 Teile (bezogen auf den Feststoffgehalt) der Dispersion P1 dosiert zugeführt und innig mit der Schmelze vermischt. In zwei darauffolgenden Entgasungszonen wurde der entstehende Wasserdampf abgeführt. Die Schmelze wurde gestrangt, gekühlt und zerkleinert. Die erhaltene Formmasse hatte eine Bruchenergie $W_{50}$ größer 120 Joule bei 23°C und 64 Joule bei -40°C, 18 Joule bei -60°C.

**Beispiel 7**

50 Teile Polyoxymethylen, 30 Teile Wollastonit und 1 Teil Tetramethoxymethylmelamin wurden dem Einzug eines Doppelschneckenextruders zugeführt und bei 200°C plastifiziert. In einer darauffolgenden Zone wurden 20 Teile (bezogen auf den Feststoffgehalt) der Dispersion P4 dosiert zugegeben und innig mit der Schmelze vermischt und der entstehende Wasserdampf in zwei nachfolgenden Entgasungszonen abgeführt. Die Schmelze wurde anschließend gestrangt, gekühlt und zerkleinert. Die erhaltene Formmasse hatte eine Bruchenergie $W_{50}$ von 11 Joule bei 23°C

9

und 8 Joule bei -40°C, 4 Joule bei -60°C.

**Beispiel 8**

60 Teile Polyoxymethylen sowie 1 Gew.-Teil Tetramethoxymethylmelamin wurden dem Einzug eines Doppelschneckenextruders zugeführt und bei 200°C plastifiziert. In einer darauffolgenden Zone wurden 30 Gew.-Teile (bezogen auf den Feststoffgehalt) der Dispersion P5 dosiert zugegeben und innig mit der Schmelze vermischt. In zwei nachfolgenden Entgasungszonen wurde der entstehende Wasserdampf abgeführt. In einer darauffolgenden Zone des Extruders wurden dann 10 Gew.-Teile Glasfasern (Rovings mit einem Durchmesser der Fasern von etwa 10 µm) in die Schmelze eingeführt und darin fein verteilt. Die erhaltene Formmasse hatte eine Bruchenergie $W_{50}$ von 23 Joule bei 23°C und 17 Joule bei -40°C und 9 Joule bei -60°C.

**Vergleichsbeispiel 3**

Man verfährt wie in Beispiel 1 beschrieben, verwendet jedoch anstelle der Dispersion P1 20 Gew.-Teile (bezogen auf den Feststoffgehalt) der Dispersion P7. Man erhält eine Formmasse mit einer Bruchenergie $W_{50}$ von 28 Joule bei 23°C und 5 Joule bei -40°C und 1 Joule bei -60°C sowie einen Gewichtsverlust $V_L$ von 28,5 %.

**Vergleichsbeispiel 4**

Man verfährt wie in Beispiel 1 beschrieben, verwendet jedoch 20 Gew.-Teile (bezogen auf den Feststoffgehalt) der Dispersion P8. Die erhaltene Formmasse hatte eine Bruchenergie $W_{50}$ von 25 Joule bei 23°C, 6 Joule bei -40°C und 2 Joule bei -60°C sowie einen Gewichtsverlust $V_L$ von 22,7 %.

**Vergleichsbeispiel 5**

80 Gew.-Teile Polyoxymethylen und 20 Gew.-Teile eines Polyurethans, aufgebaut aus 4,4'-Diphenylmethandiisocyanat, Adipinsäure und 1,4-Butandiol wurden in einem Zweiwellenextruder bei einer Temperatur von 200°C aufgeschmolzen und innig vermischt, dann gestrangt, abgekühlt und zerkleinert. Die so erhaltene Formmasse hatte eine Bruchenergie $W_{50}$ von 33 Joule bei 23°C und 4 Joule bei -40°C. Bei Lagerung am Tageslicht über einen Zeitraum von 3 Wochen erfolgte eine deutliche Vegilbung der Formmasse und bei einer Verarbeitungstemperatur über 215°C verfärbte sich die Formmasse bräunlich.

Die erfindungsgemäßen Formmassen weisen nach einer 3-wöchigen Lagerung am Tageslicht keine merkliche Vergilbung auf und auch keine Braunfärbung bei Verarbeitungstemperaturen über 215°C.

10

**Patentansprüche**

1. Schlagzähe Polyoxymethylenformmassen, enthaltend

A) 30 bis 95 Gew.-% mindestens eines Polyoxymethylens

B) 5 bis 70 Gew.-% mindestens eines durch Emulsionspolymerisation hergestellten in der Komponente A dispergierten kautschukelastischen Pfropfpolymerisats mit einem mittleren Teilchendurchmesser von 0,08 bis 2 µm, aufgebaut aus
   1. 60 bis 90 Gew.-% einer Pfropfgrundlage aus vernetztem Polybutadien, in der bis zu 30 Gew.-% des Butadiens durch Isopren, 2,3-Dimethylbutadien, Styrol, p-Methylstyrol, α-Methylstyrol und/oder (Meth)acrylnitril ersetzt sein kann und
   2. 10 bis 40 Gew.-% mindestens einer Pfropfhülle aus Polymerisaten von Styrol und/oder Methylmethacrylat, in der bis zu 30 Gew.-%, bezogen auf 2, durch Acrylnitril oder Acrylsäure-$C_1$- bis -$C_8$-alkylester ersetzt sein können,

   wobei sich jeweils die Gewichtsprozente A und B sowie 1 und 2 auf 100 ergänzen sowie

C) gegebenenfalls Hilfsstoffe in wirksamen Mengen, erhältlich durch inniges Vermischen einer Schmelze des Polyoxymethylens A mit einer wäßrigen Dispersion des kautschukelastischen Pfropfpolymerisats B und gleichzeitiger Entfernung des verdampfenden Wassers.

2. Schlagzähe Formmassen nach Anspruch 1, *dadurch gekennzeichnet*, daß das Pfropfpolymerisat einen Gelgehalt größer 50 % hat.

3. Schlagzähe Formmassen nach den Ansprüchen 1 bis 2, *dadurch gekennzeichnet*, daß das Pfropfpolymerisat eine Teilchengröße von 0,08 bis 0,5 µm hat.

4. Schlagzähe Formmassen nach den Ansprüchen 1 bis 3, *dadurch gekennzeichnet*, daß das Pfropfpolymerisat (Komponente B) aufgebaut ist aus 70 bis 85 Gew.-% einer Pfropfgrundlage aus vernetztem Polybutadien und 15 bis 30 Gew.-% einer Propfhülle bestehend aus Methylacrylsäuremethylester, welcher bis zu 20 Gew.-% durch Acrylsäure-$C_1$- bis -$C_4$-alkylester ersetzt sein kann.

5. Schlagzähe Formmassen nach mindestens einem der Ansprüche 1 bis 4, *dadurch gekennzeichnet*, daß sie im wesentlichen aus den Komponenten A und B bestehen und bei einem Gehalt von 20 Gew.-% B, bezogen auf die Summe von A + B, eine Bruchenergie $W_{50}$ bei -40°C von mindestens 14 J aufweisen.

6. Schlagzähe Formmassen nach den Ansprüchen 1 bis 4, *dadurch gekennzeichnet*, daß sie 10 bis 100 Gew.-% verstärkend wirkende Füllstoffe, bezogen auf die Summe der Komponenten A und B, enthalten.

7. Verfahren zur Herstellung von Polyoxymethylenformmassen nach Anspruch 1, *dadurch gekennzeichnet*, daß man eine Schmelze des rohen Polyoxymethylens A mit einer wäßrigen Dispersion des kautschuk-elastischen Pfropfpolymerisats B innig vermischt und gleichzeitig das verdampfende Wasser und die Abbauprodukte des rohen Polyoxymethylens entfernt.

## Claims

1. An impact-resistant polyoxymethylene molding material containing

A) from 30 to 95 % by weight of one or more polyoxymethylenes and
B) from 5 to 70 % by weight of one or more elastomeric graft polymers which are prepared by emulsion polymerization, are dispersed in component A, have a mean particle diameter of from 0.08 to 2 μm and are composed of
  1. from 60 to 90 % by weight of a grafting base of crosslinked polybutadiene in which not more than 30 % by weight of the butadiene may be replaced with isoprene, 2,3-dimethylbutadiene, styrene, p-methylstyrene, α-methylstyrene and/or (meth)acrylonitrile, and
  2. from 10 to 40 % by weight of one or more grafted shells consisting of polymers of styrene and/or methyl methacrylate, in which not more than 30 % by weight of the said monomers 2 may be replaced with acrylonitrile or a $C_1$-$C_8$-alkyl acrylate,

the percentages A and B and the percentages 1 and 2 summing to 100, with or without

C) effective amounts of assistants obtainable by thoroughly mixing a melt of the polyoxymethylene A with an aqueous dispersion of the elastomeric graft polymer B and removing the vaporized water at the same time.

2. An impact-resistant molding material as claimed in claim 1, wherein the graft polymer has a gel content greater than 50 %.

3. An impact-resistant molding material as claimed in either of claims 1 and 2, wherein the graft polymer has a particle size of from 0.08 to 0.5 μm.

4. An impact-resistant molding material as claimed in any of claims 1 to 3, wherein the graft polymer (component B) is composed of from 70 to 85 % by weight of a grafting base of crosslinked polybutadiene and from 15 to 30 % by weight of a grafted shell consisting of methyl methacrylate, of which not more than 20 % by weight may be replaced with a $C_1$-$C_4$-alkyl acrylate.

5. An impact-resistant molding material as claimed in one or more of claims 1 to 4, which essentially consists of the components A and B and has a breaking energy $W_{50}$ of not less than 14 J at -40°C when the content of B is 20 % by weight, based on the sum of A + B.

6. An impact-resistant molding material as claimed in any of claims 1 to 4, which contains from 10 to 100 % by weight, based on the sum of components A and B, of reinforcing fillers.

7. A process for the preparation of a polyoxymethylene molding material as claimed in claim 1, wherein a melt of the crude polyoxymethylene A is mixed thoroughly with an aqueous dispersion of the elastomeric graft polymer B, and at the same time the vaporized water and the degradation products of the crude polyoxymethylene are removed.

## Revendications

1. Masses à mouler à base de polyoxyméthylène résistantes au choc, contenant

A) de 30 à 95% en poids d'au moins un polyoxyméthylène,
B) de 5 à 70 % en poids d'au moins un polymère greffé caoutchouteux préparé par polymérisation en émulsion, en dispersion dans le composant A et ayant un diamètre moyen de particules de 0,08 à 2 μm, constitué par
  1. 60 à 90 % en poids d'une base de greffage en polybutadiène réticulé, dans laquelle jusqu'à 30 % en poids du butadiène peuvent être remplacés par de l'isoprène, du 2,3-diméthylbutadiène, du styrène, du p-méthylstyrène, de l'α-méthylstyrène et/ou du (méth)acrylonitrile, et
  2. 10 à 40 % en poids d'au moins une enveloppe de greffage en polymères de styrène et/ou de méthacrylate de méthyles dans laquelle jusqu'à 30 % en poids, sur la base de 2, peuvent être remplacés par de l'acrylonitrile ou des esters $C_1$-$C_8$-alkyliques d'acide acrylique,

les sommes des pourcentages en poids de A et B, ainsi que de 1 et 2 étant égales à 100, et

C) le cas échéants des adjuvants dans des quantités efficaces, pouvant être obtenues par mélange intime d'une masse fondue du polyoxyméthylène à avec une dispersion aqueuse du polymère greffé caoutchouteux

13

B et par élimination simultanée de l'eau qui se vaporise.

2. Masses à mouler résistantes au choc selon la revendication 1, caractérisées en ce que le polymère greffé a une teneur en gel supérieure à 50 %.

3. Masses à mouler résistantes au choc selon la revendication 1 ou 2, caractérisées en ce que le polymère greffé a une grosseur de particules de 0,08 à 0,5 $\mu$m.

4. Masses à mouler résistantes au choc selon l'une quelconque des revendications 1 à 3, caractérisées en ce que le polymère greffé (composant B) est constitué par 70 à 85 % en poids d'une base de greffage en polybutadiène réticulé et par 15 à 30% en poids d'une enveloppe de greffage se composant d'ester méthylique d'acide méthacrylique qui peut être remplacé, jusqu'à 20 % en poids, par un ester $C_1$-$C_4$-alkylique d'acide acrylique.

5. Masses à mouler résistantes au choc selon l'une quelconque au moins des revendications 1 à 4, caractérisées en ce qu'elles sont constituées essentiellement par les composants A et B et présentent, avec une teneur de 20 % en poids de B par rapport à la somme de A + B, une énergie de rupture $W_{50}$ à -40°C d'au moins 14 J.

6. Masses à mouler résistantes au choc selon l'une quelconque des revendications 1 à 4, caractérisées en ce qu'elles contiennent de 10 à 100 % en poids, par rapport à la somme des composants A et B, de matières de charge ayant un effet de renforcement.

7. Procédé de préparation de masses à mouler à base de polyoxyméthylène selon la revendication 1, caractérisé en ce qu'on mélange intimement une masse fondue du polyoxyméthylène A brut avec une dispersion aqueuse du polymère greffé caoutchouteux B et, en même temps, on élimine l'eau qui se vaporise et les produits de dégradation de polyoxyméthylène brut.